Europäisches Patentamt

European Patent Office

Office européen des brevets

(11) Veröffentlichungsnummer : **0 117 411**
**B1**

(12) # EUROPÄISCHE PATENTSCHRIFT

(45) Veröffentlichungstag der Patentschrift :
30.12.86

(51) Int. Cl.⁴ : **C 08 F  6/00**

(21) Anmeldenummer : **84100486.4**

(22) Anmeldetag : **18.01.84**

(54) **Verfahren zum Entfernen von physiologisch bedenklichen Lösungsmitteln aus Carboxyl- oder Säureanhydridgruppen enthaltenden Polymerisaten.**

(30) Priorität : **26.01.83 DE 3302495**

(43) Veröffentlichungstag der Anmeldung :
**05.09.84 Patentblatt 84/36**

(45) Bekanntmachung des Hinweises auf die Patenterteilung : **30.12.86 Patentblatt 86/52**

(84) Benannte Vertragsstaaten :
**DE FR GB IT**

(56) Entgegenhaltungen :
**Keine Entgegenhaltungen.**

(73) Patentinhaber : **BASF Aktiengesellschaft**
**Carl-Bosch-Strasse 38**
**D-6700 Ludwigshafen (DE)**

(72) Erfinder : **Denzinger, Walter**
**Wormser Landstrasse 65**
**D-6720 Speyer (DE)**
Erfinder : **Hartmann, Heinrich, Dr.**
**Weinheimer Strasse 46**
**D-6703 Limburgerhof (DE)**
Erfinder : **Faulhaber, Gerhard, Dr.**
**Seebacher Strasse 47**
**D-6702 Bad Duerkheim (DE)**
Erfinder : **Raubenheimer, Hans-Juergen**
**Benzstrasse 6**
**D-6834 Ketsch (DE)**

## Beschreibung

Carboxyl- und Säureanhydridgruppen enthaltende Polymerisate besitzen für die verschiedensten Einsatzgebiete große Bedeutung. So werden beispielsweise geringfügig vernetzte Poly(meth)acrylsäuren, Copolymerisate aus $C_2$- bis $C_4$-Olefinen und Maleinsäureanhydrid, Copolymerisate aus $C_1$- bis $C_4$-Alkylvinylethern und Maleinsäureanhydrid als Verdickungsmittel auf dem Textildruck-, Kosmetik- und Pharmasektor eingesetzt. Copolymerisate des Maleinsäureanhydrids mit Methylvinylether besitzen in Form der Monoester mit einwertigen $C_1$- bis $C_4$-Alkoholen als Haarspraybindemittel steigende Bedeutung. Optimal wirksam für diesen Verwendungszweck sind mittel- bis hochmolekulare Polymerisate, die meist durch Fällungspolymerisation in Lösungsmitteln, in denen die Monomeren löslich und das gebildete Polymere unlöslich ist, hergestellt werden. Besonders geeignete Lösungsmittel für die Fällungspolymerisation sind solche, die bei der Polymerisation eine niedrige Übertragungskonstante besitzen, wie Benzol und Toluol sowie Chlorkohlenwasserstoffe, z. B. Tetrachlorkohlenstoff, Dichlorethan und Trichlorethan. Üblicherweise verwendet man Benzol, Dichlorethan und Trichlorethan. Da diese Lösungsmittel physiologisch bedenklich sind, müssen sie, bevor man die Polymerisate verwendet, insbesondere bei Anwendungen auf dem Kosmetiksektor, weitgehend aus den Polymerisaten entfernt werden. Die Polymerisatsuspensionen werden dazu üblicherweise im Trockner, wie Sprühtrockner, Wirbelschichttrockner, Schaufeltrockner und ähnlichen Vorrichtungen getrocknet. Auch nach intensiver Trocknung bei höheren Temperaturen sowie vermindertem Druck und längeren Trocknungszeiten beträgt der Restgehalt an physiologisch bedenklichen Lösungsmitteln im Polymerisat üblicherweise 1 bis 3 Gew.-%. Beispielsweise hatte eine in Benzol polymerisierte geringfügig vernetzte Polyacrylsäure nach 24 stündigem Erhitzen auf 80 °C unter einem Druck von 0,01 mbar noch einen Restgehalt an Benzol von 1,4 Gew.-%. Produkte mit derart hohen Benzolgehalten sind in der Praxis nicht verwendbar.

Suspendiert man beispielsweise die Polymeren in einem nicht toxischen Lösungsmittel, wie aliphatischen oder cycloaliphatischen Kohlenwasserstoffen, in denen die Polymerisate unlöslich sind, aber das physiologisch bedenkliche Lösungsmittel löslich ist, rührt die Suspension 24 Stunden und verdampft dann den Kohlenwasserstoff, so stellt man fest, daß das physiologisch bedenkliche Lösungsmittel im Polymerisat nicht ausgetauscht wurde. Der Gehalt an physiologisch bedenklichem Lösungsmittel bleibt vielmehr konstant. Ein solches Extraktionsverfahren, dem aber eine andere Aufgabenstellung zugrunde liegt — nämlich niedrigmolekulare Polymerisate von höhermolekularen zu trennen — ist beispielsweise aus der EP-A 31 713 bekannt.

Aufgabe der Erfindung ist es, den Gehalt an physiologisch bedenklichen Lösungsmitteln in Carboxyl- oder Säureanhydridgruppen enthaltenden Polymerisaten zu erniedrigen.

Die Aufgabe wird erfindungsgemäß gelöst mit einem Verfahren zum Entfernen von physiologisch bedenklichen Lösungsmitteln aus Carboxyl- und Säureanhydridgruppen enthaltenden Polymerisaten durch Behandeln der Polymerisate mit aliphatischen Kohlenwasserstoffen, wenn die Polymerisate mit aliphatischen $C_5$- bis $C_{18}$-Kohlenwasserstoffen bei einer Temperatur behandelt werden, die mindestens so hoch liegt, wie die untere Grenze des Erweichungsbereiches des Polymerisates. Die Polymerisate werden vorzugsweise bei einer Temperatur behandelt, die der Glasübergangstemperatur der Polymerisate entspricht oder die darüber liegt.

Geeignete Carboxylgruppen enthaltende Polymerisate sind beispielsweise die Homo- und Copolymerisate ethylenisch ungesättigter $C_3$- bis $C_5$-Carbonsäuren, wie Acrylsäure, Methacrylsäure, Crotonsäure und Itakonsäure. Diese Monomeren sind im Falle von Copolymerisaten zu 70 bis 99,9 Gew.-% am Aufbau der Copolymerisate beteiligt. Für den Einsatz als Verdickungsmittel kommen vorzugsweise vernetzte Polymerisate von Carbonsäuren oder Maleinsäureanhydrid in Betracht. Diese Polymerisate werden erhalten, indem man eine ethylenisch ungesättigte Carbonsäure in Gegenwart eines 2- oder mehrfach ethylenisch ungesättigten Monomeren copolymerisiert. Je nach Vernetzungsgrad der Polymerisate setzt man 0,001 bis 10, vorzugsweise 0,2 bis 5 Gew.-% eines mehrfach ethylenisch ungesättigten Monomeren als Vernetzungsmittel ein. Geeignete Vernetzungsmittel sind beispielsweise Divinylbenzol, Divinylketon, 1,4-Butadien, Ethylenglykoldiacrylat, Methylenbisacrylamid, Diallylphthalat, Divinylether, Divinyldioxan, Polyalkenylpolyether, wie Polyallyl- und Polyvinylether von Oligosacchariden wie Pentaallylsucchrose, Pentaerythrittriallylether, Diallylacrylamid, Polyallyl- und Polyvinylsilane, Triallylcyanurat, Allylester der Phosphonsäure und phosphorigen Säure sowie Allylphosphoramidoverbindungen wie Phosphorsäuremonoethylester-N,N-(diallyl)diamid sowie Mischungen dieser Monomeren. Da die vernetzten Polyacrylsäuren bei der Verwendung als Verdickungsmittel stark hydrolysierenden Bedingungen ausgesetzt sind, bevorzugt man für die Herstellung hydrolysestabiler Polymerisate solche Vernetzer, die unter stark sauren oder stark basischen Bedingungen nicht zur Spaltung neigen. Hierzu gehören beispielsweise Divinylbenzol, Divinyldioxan, Tetravinylsilan, Tetraallylsilan und Pentaaerithrittriallylether.

Die Carboxylgruppen enthaltenden, vernetzten Polymerisate können gegebenenfalls mit bis zu 20 Gew.-% einer anderen ethylenisch ungesättigten Verbindung modifiziert werden ; z. B. eignen sich dafür Amide und Ester von ethylenisch ungesättigten $C_3$- bis $C_5$-Mono- und Dicarbonsäuren, z. B. Acrylamid, Methacrylamid und Ester von Acrylsäure oder Methacrylsäure mit einwertigen $C_1$- bis $C_8$-Alkoholen, Acrylnitril, Methacrylnitril, Vinylacetat, Vinylpropionat, Vinylalkylether sowie Acrylamidomethylpropansulfosäure. Diese Gruppe von Comonomeren wird höchstens in einer Menge einpolymerisiert, so daß noch Polymerisate entstehen, die noch in alkalischen wäßrigen Systemen löslich bzw. quellbar sind.

Als Säureanhydridgruppen enthaltende Polymerisate kommen Copolymerisate aus Maleinsäureanhydrid mit $C_2$- bis $C_4$-Olefinen und Styrol oder Copolymerisate aus Maleinsäureanhydrid und $C_1$- bis $C_4$-Alkylvinylethern in Betracht. Der Maleinsäureanhydridgehalt dieser Copolymerisate beträgt 50 Mol-%.

Die Carboxylgruppen- und Säureanhydridgruppen enthaltenen Copolymerisate werden durch Fällungspolymerisation in einem organischen Lösungsmittel, in dem die Monomeren löslich und das Copolymere unlöslich ist, hergestellt. Das Lösungsmittel muß gegenüber dem Monomeren und den Copolymerisaten inert sein. Vorzugsweise verwendet man Lösungsmittel, deren Übertragungskonstante bei der Polymerisation niedrig ist, wie Benzol, Toluol und Chlorkohlenwasserstoffe, wie Tetrachlorkohlenstoff, Dichlorethan und Trichlorethan. Diese Lösungsmittel sind jedoch physiologisch bedenklich und müssen weitestgehend aus den Polymerisaten entfernt werden.

Um ein Verklumpen der ausgefallenen Polymerisatteilchen bei der Polymerisation zu verhindern und um zu hochkonzentrierten Polymerisatsuspensionen zu gelangen, ist es oftmals von Vorteil, Schutzkolloide mitzuverwenden. Als Schutzkolloide sind Polymerisate geeignet, die möglichst hydrophil sind und die sich in dem bei der Fällungspolymerisation eingesetzten Lösungsmittel einwandfrei lösen. Geeignet sind beispielsweise Polyalkylether, wie Polyvinylmethylether, Homo- und Copolymerisate des Vinylpyrrolidons mit beispielsweise Vinylestern, wie Vinylacetat und/oder Vinylpropionat oder Acrylsäure- bzw. Methacrylsäureestern, wobei wasserfreie Homopolymerisate des Vinylpyrrolidons bevorzugt sind. Man setzt das Schutzkolloid in Mengen von 0,1 bis 10, vorzugsweise 0,3 bis 3 % ein. Die Monomerenkonzentration beträgt beim Arbeiten in Abwesenheit eines Schutzkolloids 5 bis 20 und bei Verwendung eines Schutzkolloids 20 bis 40 Gew.-%.

Um Polymerisate mit möglichst hohem Molekulargewicht herzustellen, wählt man bei der Polymerisation Temperaturen, die in der Regel nicht oberhalb von 80 °C liegen, vorzugsweise in dem Bereich von 40 bis 75 °C. Die Polymerisation wird in Gegenwart üblicher Polymerisationsinitiatoren, wie Peroxiden, Hydroperoxiden, Azoverbindungen, Redoxkatalysatoren oder Mischungen von Polymerisationsinitiatoren durchgeführt.

Wie bereits oben ausgeführt, ist es schwierig, physiologisch bedenkliche Kohlenwasserstoffe, z. B. aromatische Kohlenwasserstoffe, wie Benzol, Toluol, Xylol oder Chlorkohlenwasserstoffe wie Tetrachlorkohlenstoff, Dichlorethan, Trichlorethan und Tetrachlorethan weitgehend aus den bei der Fällungspolymerisation erhaltenen Polymerisaten zu entfernen. Die Fällungspolymerisate werden daher zunächst isoliert, indem man das jeweils bei der Fällungspolymerisation verwendete physiologisch bedenkliche Lösungsmittel weitgehend entfernt, z. B. durch Filtrieren, Dekantieren oder Destillieren und Trocknen. Das zurückbleibende pulverförmige Polymerisat wird dann erfindungsgemäß mit einem aliphatischen Kohlenwasserstoff bei einer Temperatur behandelt, die mindestens so hoch liegt, wie die untere Grenze des Erweichungsbereiches des Polymerisates. Als aliphatische Kohlenwasserstoffe werden die physiologisch unbedenklichen $C_5$- bis $C_{18}$-, vorzugsweise $C_7$- bis $C_{12}$-aliphatischen Kohlenwasserstoffe eingesetzt, wie Pentan, Heptan, Octan, Nonan, Dodecan, Paraffinöl, Cyclohexan, Methylcyclohexan, Dimethylcyclohexan, Cyclooctan, sowie Mischungen verschiedener Kohlenwasserstoffe, z. B. Mischungen aus n-Octan und Methylcyclohexan.

Die Carboxyl- und Säureanhydridgruppen enthaltenden Polymerisate werden mit den aliphatischen Kohlenwasserstoffen bei einer Temperatur behandelt, die mindestens so hoch liegt, wie die untere Grenze des Erweichungsbereiches der Polymerisate oder vorzugsweise der Glasübergangstemperatur der Polymerisate entspricht. Die untere Grenze des Erweichungsbereiches der Polymerisate kann leicht bestimmt werden, z. B. auf der Koflerbank, wenn die Pulverteilchen beginnen zu verbacken.

Die Glasübergangstemperatur (Definition der Glasübergangstemperatur vgl. B. Vollmert, Grundriß der Makromolekularen Chemie, Bd. IV, 146-153 (1979)) kann ebenso wie der Beginn des Erweichungsbereiches des Polymerisates leicht bestimmt werden. Beispielsweise beträgt die Glasübergangstemperatur einer geringfügig vernetzten Polyacrylsäure 129 °C, wobei die untere Grenze des Erweichungsbereiches des Polymerisates 125 °C beträgt und das Polymerisat bei 134 °C vollständig geschmolzen ist. Ein molares Copolymerisat aus Maleinsäureanhydrid und Ethylen vom K-Wert 120 hatte eine Glasübergangstemperatur von 139 °C, wobei der Beginn des Erweichungsbereiches 135 °C beträgt und die Masse bei 143 °C vollständig geschmolzen war. Ein schwach vernetztes molares Copolymerisat aus Maleinsäureanhydrid und Isobuten hatte eine Glasübergangstemperatur von 165 °C, die untere Grenze des Erweichungsbereiches des Polymerisates betrug 161 °C, das Polymerisat war bei 169 °C vollständig geschmolzen. Ein molares Copolymerisat aus Maleinsäureanhydrid und Methylvinylether vom K-Wert 50 hatte eine Glasübergangstemperatur von 159 °C, die untere Grenze des Erweichungsbereiches lag hier bei 154 °C. Das Polymerisat war bei 163 °C vollständig geschmolzen.

Die untere Grenze des Erweichungsbereiches der Polymerisate als auch die Glasübergangstemperatur der Polymerisate können durch Zusatz von Lösungsmitteln für die Polymerisate stark gesenkt werden. Solche Lösungsmittel sollten selbstverständlich physiologisch unbedenklich sein, um für das erfindungsgemäße Verfahren angewendet werden können. Geeignete Lösungsmittel für die Polymerisate sind beispielsweise Ketone, wie Aceton, Methylethylketon und Diethylketon, Ester, wie Methylacetat, Ethylacetat, Butylacetat sowie Tetrahydrofuran und Dimethylformamid. Die genannten Lösungsmittel können sowohl für Carbonsäure- als auch für Carbonsäureanhydridgruppen enthaltende Polymerisate verwendet werden, während Lösungsmittel, die mit Carbonsäureanhydridgruppen reagieren, wie Alkohole, nur für die Senkung der Glasübergangstemperatur und des beginnenden Erweichungsbereiches von carboxylgruppenhaltigen Polymerisaten Anwendung finden. z. B. Alkohole wie Methanol, Ethanol, Propanol, Isopropanol und Butanol. Bezogen auf aliphatischen Kohlenwasserstoff verwendet man 1 bis 10, vorzugsweise 2 bis 5 % eines Lösungsmittels für die Polymerisate. Durch den Zusatz der Lösungsmittel zu den aliphatischen Kohlenwasserstoffen wird die Temperatur, bei der die Polymerisate behandelt werden, stark erniedrigt, so daß eine thermische Schädigung der Polymerisate weitgehend vermieden wird. Beispielsweise kann bei Verwendung eines Lösungsmittelgemisches auf 95 Teilen n-Octan und 5 Teilen Aceton in 20 %iger Suspension die Glasübergangstemperatur einer geringfügig vernetzten Polyacrylsäure von 129 °C auf 85 °C gesenkt werden.

Um das physiologisch bedenkliche Lösungsmittel aus dem Polymerisat zu entfernen, wird das Polymerisat üblicherweise in einem aliphatischen Kohlenwasserstoff in Konzentrationen von 5 bis 50, vorzugsweise 20 bis 40 Gew.-% suspendiert und in Form der Suspension bis mindestens auf eine Temperatur erhitzt, die so hoch liegt, wie die untere Grenze des Erweichungsbereiches des Polymerisates oder vorzugsweise auf die Glasübergangstemperatur des Polymerisates. Sofern das in dem aliphatischen Kohlenwasserstoff suspendierte Polymerisat nicht auf eine Temperatur erhitzt wird, bei der das Polymerisat vollständig geschmolzen ist, erhält man nach der erfindungsgemäßen Behandlung wieder ein pulverförmiges Polymerisat. Erhitzt man dagegen das Polymerisat auf Temperaturen die oberhalb der Schmelztemperatur des Polymerisates liegen, bei der also das gesamte Polymerisat geschmolzen ist, so tritt eine Verklumpung der Polymerisatteilchen und sogar ein Zusammenfließen der Polymerisatteilchen ein. Das Polymerisat muß dann im Anschluß an die erfindungsgemäße Behandlung zerkleinert werden. Die Behandlungstemperaturen betragen 60 bis 200 °C.

Das bei der Fällungspolymerisation erhaltene Polymerisat, das noch physiologisch bedenkliche Lösungsmittel enthält, kann nach dem Trocknen auch in einer Extraktionssäule behandelt werden, indem man den Kohlenwasserstoff auf die Extraktionssäule aufgibt, ihn vorher aber mindestens auf eine Temperatur erhitzt, die der Glasübergangstemperatur des Polymerisates entspricht. Eine solche Behandlung kann vorteilhaft in einem Soxhletapparat vorgenommen werden. In anderen Fällen kann es auch von Vorteil sein, das Polymere in einem aliphatischen Kohlenwasserstoff, dessen Siedepunkt mit der Glasübergangstemperatur des Polymeren übereinstimmt, zu erhitzen und das physiologisch bedenkliche Lösungsmittel über eine Kolonne, gegebenenfalls als azeotrop mit dem Extraktionsmittel aus der Mischung auszuschleusen und dann das Polymerisat aus der Suspension auf übliche Art abzutrennen und zu trocknen.

Die Art und Dauer der Behandlung der Carboxyl- und Säureanhydridgruppen enthaltenden Polymerisate mit einem aliphatischen Kohlenwasserstoff ist von verschiedenen Faktoren abhängig. Sofern hohe Gehalte an physiologisch bedenklichem Lösungsmittel zu entfernen sind, wird das physiologisch bedenkliche Lösungsmittel zweckmäßigerweise aus dem System entfernt, z. B. durch Destillation. Die Dauer der Behandlung der Polymerisate beträgt beispielsweise wenige Minuten bis zu einigen Stunden. Meistens gelingt es, die physiologisch bedenklichen Lösungsmittel innerhalb von 1 bis 3 Stunden aus den Carboxyl- und Säureanhydridgruppen enthaltenden Polymerisaten zu entfernen.

Die in den Beispielen angegebenen Teile sind Gewichtsteile, die Angaben in Prozent beziehen sich auf das Gewicht der Stoffe. Die K-Werte wurden nach H. Fikentscher, Cellulose-Chemie 32, 58-64 und 71-74 (1932) durchgeführt. Die Restlösungsmittelgehalte der Polymerisate wurden gaschromatografisch bestimmt. Die Glasübergangstemperaturen wurden nach der DSC-Methode ermittelt, vgl. B. Vollmert, Grundriß der Makromolekularen Chemie, Bd. IV 146-153 (1979) Verlag E. Vollmert, Karlsruhe.

Beispiel 1

a) In einem beheizbaren Kessel, der mit einem Rührer und einer Vorrichtung versehen ist, die ein Arbeiten unter Stickstoffatmosphäre gestattet, wurden 80 Teile n-Octan vorgelegt. Unter Rühren gab man dann 20 Teile einer in Benzol polymerisierten, geringfügig mit Divinyldioxan vernetzten Polyacrylsäure zu, die einen Restgehalt an Benzol von 1,8 % enthielt. Die untere Grenze des Erweichungsbereiches des Polymerisates betrug 115 °C, die Glasübergangstemperatur 125 °C. Die Suspension wurde dann 3 Stunden bei einer Temperatur von 24 °C gerührt. Danach wurde das n-Octan durch Eindampfen in einem Rotationsverdampfer entfernt und der Rückstand bei einer Badtemperatur von 70 °C im Wasserstrahlpumpenvakuum 3 Stunden getrocknet. Das Polymerisat enthielt danach noch 1,6 % Benzol.

b) Das Beispiel 1a) wurde wiederholt, jedoch mit der Ausnahme, daß die Temperatur bei der Behandlung des Polymerisates auf 85 °C erhöht wurde. Nach dieser Behandlung enthielt das Polymerisat noch 1,8 % Benzol.

c) Beispiel 1a) wurde wiederholt, jedoch steigerte man die Behandlungstemperatur auf 115 °C. Man erhielt ein Polymerisat, das 0,4 % Benzol enthielt.

d) Das Beispiel 1a) wurde wiederholt, jedoch mit der Ausnahme, daß man die Behandlungstemperatur auf 125 °C steigerte. Der Benzolgehalt des behandelten Polymerisats betrug 0,08 %.

Die Beispiele c) und d) zeigen, daß der Benzolgehalt von geringfügig vernetzter Polyacrylsäure erst an der unteren Grenze des Erweichungspunktes bzw. bei der Glastemperatur des Polymerisates durch Behandeln mit n-Octan entscheidend erniedrigt werden kann.

## Beispiel 2

Beispiel 1a) wird wiederholt, jedoch setzt man eine geringfügig vernetzte Polyacrylsäure ein, die sich von der in Beispiel 1 beschriebenen nur durch den Benzolgehalt unterscheidet. Der Benzolgehalt betrug 3 %. Der Tabelle 1 ist jeweils die Dauer der Behandlung des Polymerisates bei einer Temperatur von 125 °C und der Benzolgehalt angegeben, der nach der Behandlung im Polymerisat gefunden wurde.

Tabelle 1

| Beispiel 2 | Zeit | Benzolgehalt im Trockenprodukt [%] |
|---|---|---|
| a | 6 Minuten | 0,3 |
| b | 20 Minuten | 0,3 |
| c | 1 Stunde | 0,16 |
| d | 1,5 Stunden | 0,09 |
| e | 2 Stunden | 0,07 |
| f | 3 Stunden | 0,07 |

## Beispiel 3

Die im Beispiel 1 beschriebene geringfügig vernetzte Polyacrylsäure wurde in 80 Teilen eines Gemisches aus 95 Teilen n-Octan und 5 Teilen eines Lösungsmittels für die geringfügig vernetzte Polyacrylsäure suspendiert und unter den in Tabelle 2 angegebenen Bedingungen behandelt. Nach der Behandlung wurde, wie in Beispiel 1a angegeben, das pulverförmige Festprodukt isoliert.

Tabelle 2

| Beispiel 3 | Extraktionsmittel | Bedingungen | Benzolgehalt im Trocken- produkt [%] |
|---|---|---|---|
| a (Vergl.) | 95 Teile n-Octan 5 Teile Aceton | 24 Std. bei Raumtemp. | 1,9 |
| b | wie a) | 3 Std. bei 85°C | 0,09 |
| c (Vergl.) | 95 Teile n-Octan 5 Teile Isopropanol | 24 Std. bei Raumtemp. | 1,8 |
| d | wie c) | 3 Std. bei 85°C | 0,08 |

Die Zugabe von Aceton bzw. Isopropanol zu n-Octan in den angegebenen Mengen bewirkte, daß die Glasübergangstemperatur der geringfügig vernetzten Polyacrylsäure von 129 auf 85 °C gesenkt wurde.

## Beispiel 4

30 Teile einer mit Pentaerythrittriallylether geringfügig vernetzten, in Trichlorethan hergestellten Polyacrylsäure, die einen mittleren Teilchendurchmesser von 0,05 mm und einen Restgehalt von 1,4 % Trichlorethan hatte, wurde in der im Beispiel 1 beschriebenen Apparatur in 70 Teilen n-Octan suspendiert und jeweils 3 Stunden bei den in Tabelle 3 angegebenen Temperaturen erhitzt. Das Festprodukt wurde anschließend durch Verdampfen des Lösungsmittels isoliert und 3 Stunden bei einer Badtemperatur von 70 °C und 15 mbar getrocknet. Die Glasübergangstemperatur des Polymerisates betrug 125 °C, die untere Grenze des Erweichungsbereiches lag bei 115 °C.

Tabelle 3

| Beispiel 4 | Temperatur [°C] | Restgehalt [%] an Trichlorethan | n-Octan |
|---|---|---|---|
| a (Vergl.) | 24 | 1,4 | 0,1 |
| b | 115 | 0,4 | 0,2 |
| c | 125 | 0,06 | 0,2 |

## Beispiel 5

20 Teile eines Copolymerisates aus Maleinsäureanhydrid und Ethylen im Molverhältnis 1 : 1, hergestellt durch Fällungspolymerisation in 1,2-Dichlorethan und einem Teilchendurchmesser von 0,1 mm und einem restlichen Gehalt an 1,2-Dichlorethan von 2,4 % wurden in 80 Teilen Methylcyclohexan suspendiert und unter Druck auf eine Temperatur von 139 °C 1 Stunde lang erhitzt. Das Polymerisat wurde nach dem Abkühlen der Suspension abfiltriert und bei 60 °C in einem Vakuumtrockenschrank bei 20 mbar getrocknet. Das teilchenförmige Polymerisat enthielt nach der Behandlung mit Methylcyclohexan nur noch 0,05 % 1,2-Dichlorethan. Die Glastemperatur des Polymerisats betrug 139 °C.

Behandelte man dagegen zum Vergleich 20 Teile des obengenannten Copolymerisates in 80 Teilen Methylcyclohexan 24 Stunden lang bei Raumtemperatur und verdampfte anschließend das Methylcyclohexan, so enthielt das Polymerisat noch 2,3 % 1,2-Dichlorethan.

## Beispiel 6

a) 20 Teile eines Copolymerisates aus Maleinsäureanhydrid und Isobuten im Molverhältnis 1 : 1, das zusätzlich mit 0,8 % Pentaerythrittrialkylether vernetzt ist, einen restlichen Gehalt an Toluol von 4,2 % und einen Teilchendurchmesser von 0,05 mm hatte, wurde in 80 Teilen eines Lösungsmittelgemisches aus 95 Teilen Cyclohexan und 5 Teilen Ethylacetat 3 Stunden lang auf 100 °C erhitzt. Die Suspension wurde anschließend in einem Rotationsverdampfer zur Trockne eingedampft und das Pulver bei 70 °C 3 Stunden getrocknet. Es enthielt danach 0,09 % Toluol. Durch die Mitverwendung von Ethylacetat im Cyclohexan wurde die Glastemperatur des Copolymerisates von 165° auf 100 °C erniedrigt.

b) Zum Vergleich wurde das Beispiel 6a) mit der Ausnahme wiederholt, daß man das Polymerisat 24 Stunden lang bei Raumtemperatur behandelte. Nach dem üblichen Verdampfen des Lösungsmittels enthielt das Polymerisat noch 4,2 % Toluol.

## Beispiel 7

20 Teile eines durch Fällungspolymerisation in Benzol hergestellten feinteiligen Copolymerisates aus Maleinsäureanhydrid und Vinylmethylether im Molverhältnis 1 : 1, das einen K-Wert von 60 und einem Restbenzolgehalt von 2,3 % hatte, wurden in 100 Teilen einer Mischung aus 50 Teilen Nonan und 50 Teilen Dekan bis zum Sieden der Mischung erhitzt. Innerhalb von 2 Stunden destillierte man 40 Teile des Lösungsmittelgemisches ab. Der Benzolgehalt des Destillates betrug 1,1 %. Die Suspension wurde nach Abkühlen in einem Rotationsverdampfer bei 80 °C und 20 mbar eingedampft. Das so behandelte Polymerisat enthielt 0,03 % Benzol. Die Glasübergangstemperatur des Polymerisates betrug 160 °C, der Siedepunkt des Lösungsmittelgemisches lag bei 161 °C.

**Patentansprüche**

1. Verfahren zum Entfernen von physiologisch bedenklichen Lösungsmitteln aus Carboxyl- oder Säureanhydridgruppen enthaltenden Polymerisaten durch Behandeln der Polymerisate mit aliphatischen Kohlenwasserstoffen, dadurch gekennzeichnet, daß die Polymerisate mit aliphatischen $C_5$- bis $C_{18}$-Kohlenwasserstoffen bei einer Temperatur behandelt werden, die mindestens so hoch liegt, wie die untere Grenze des Erweichungsbereiches des Polymerisates.

2. Verfahren nach Anspruch 1, dadurch gekennzeichnet, daß die Polymerisate bei einer Temperatur behandelt werden, die der Glasübergangstemperatur der Polymerisate entspricht oder die darüber liegt.

3. Verfahren nach den Ansprüchen 1 und 2, dadurch gekennzeichnet, daß der Erweichungsbereich und die Glastemperatur der Polymerisate erniedrigt werden, indem man den Kohlenwasserstoffen 1 bis 10 Gew.-% eines Lösungsmittels für die Polymerisate zusetzt.

4. Verfahren nach den Ansprüchen 1 bis 3, dadurch gekennzeichnet, daß aliphatische Kohlenwasserstoffe oder Gemische von aliphatischen Kohlenwasserstoffen eingesetzt werden, deren Siedepunkte unter Normalbedingungen innerhalb des Bereiches der Glasübergangstemperatur der Polymerisate liegen.

5. Verfahren nach Anspruch 4, dadurch gekennzeichnet, daß das aus den Polymerisaten extrahierte physiologische bedenkliche Lösungsmittel aus der Polymersuspension abdestilliert wird.

6. Verfahren nach den Ansprüchen 1 bis 5, dadurch gekennzeichnet, daß als Carboxyl- oder Säureanhydridgruppen enthaltende Polymerisate geringfügig vernetzte Polyacrylsäuren und Copolymerisate aus $C_2$- bis $C_4$-Olefinen und Maleinsäureanhydrid oder aus $C_1$- bis $C_4$-Alkylvinylethern und Maleinsäureanhydrid eingesetzt werden.

7. Verfahren nach den Ansprüchen 1 bis 6, dadurch gekennzeichnet, daß die Polymerisate in einem aliphatischen Kohlenwasserstoff in Konzentrationen von 5 bis 50 Gew.-% suspendiert und in Form der Suspension behandelt werden.

**Claims**

1. A process for removing a physiologically unacceptable solvent from a polymer containing carboxyl or anhydride groups, by treating the polymer with an aliphatic hydrocarbon, wherein the polymer is treated with an aliphatic $C_5$-$C_{18}$-hydrocarbon at a temperature which is no lower than the lower limit of the softening range of the polymer.

2. A process as claimed in claim 1, wherein the polymer is treated at a temperature which is equal to, or higher than, its glass transition temperature.

3. A process as claimed in claims 1 and 2, wherein the softening range and the glass transition temperature of the polymer are lowered by adding to the hydrocarbon from 1 to 10 % by weight of a solvent for the polymer.

4. A process as claimed in claims 1 to 3, wherein the aliphatic hydrocarbon or mixture of aliphatic hydrocarbons used has, under standard conditions of temperature and pressure, a boiling point which is in the region of the glass transition temperature of the polymer.

5. A process as claimed in claim 4, wherein the physiologically unacceptable solvent extracted from the polymer is distilled off from the polymer suspension.

6. A process as claimed in claims 1 to 5, wherein a polyacrylic acid having a low degree of crosslinking, a copolymer of a $C_2$-$C_4$-olefin with maleic anhydride, or a copolymer of a $C_1$-$C_4$-alkyl vinyl ether with maleic anhydride is used as the polymer containing carboxyl or anhydride groups.

7. A process as claimed in claims 1 to 6, wherein the polymer is suspended in an aliphatic hydrocarbon in a concentration of from 5 to 50 % by weight, and is treated in the form of the suspension.

**Revendications**

1. Procédé pour l'élimination de solvants physiologiquement inacceptables de polymérisats contenant des groupes carboxyle ou anhydride d'acide, par traitement des polymérisats par des hydrocarbures aliphatiques, caractérisé par le fait que les polymérisats sont traités par des hydrocarbures aliphatiques en $C_5$ à $C_{18}$ à une température au moins égale à la limite inférieure du domaine de ramollissement des polymérisats.

2. Procédé selon la revendication 1, caractérisé par le fait que les polymérisats sont traités à une température correspondant à la température de transition vitreuse des polymérisats ou supérieure à celle-ci.

3. Procédé selon les revendications 1 et 2, caractérisé par le fait que le domaine de ramollissement et la température de transition vitreuse des polymérisats sont abaissés par addition aux hydrocarbures de 1 à 10 % en poids d'un solvant des polymérisats.

4. Procédé selon les revendications 1 à 3, caractérisé par le fait qu'on utilise des hydrocarbures aliphatiques ou des mélanges d'hydrocarbures aliphatiques dont les points d'ébullition dans les conditions normales se situent dans le domaine des températures de transition vitreuse des polymérisats.

5. Procédé selon la revendication 4, caractérisé par le fait que le solvant physiologiquement inacceptable extrait des polymérisats est éliminé de la suspension de polymère par distillation.

6. Procédé selon les revendications 1 à 5, caractérisé par le fait que comme polymérisats contenant des groupes carboxyle ou anhydride d'acide, on utilise des acides polyacryliques et des copolymérisats faiblement réticulés à base d'oléfines en $C_2$ à $C_4$ et d'anhydride maléique ou à base d'oxydes de vinyle et d'alkyle en $C_1$-$C_4$ et d'anhydride maléique.

7. Procédé selon les revendications 1 à 6, caractérisé par le fait que les polymérisats sont mis en suspension dans un hydrocarbure aliphatique à une concentration de 5 à 50 % en poids et traités sous forme de suspension.